(19) Europäisches Patentamt
European Patent Office
Office européen des brevets

(11) **EP 4 133 129 B1**

(12) **EUROPÄISCHE PATENTSCHRIFT**

(45) Veröffentlichungstag und Bekanntmachung des Hinweises auf die Patenterteilung:
**15.11.2023  Patentblatt 2023/46**

(21) Anmeldenummer: **21713876.7**

(22) Anmeldetag: **17.03.2021**

(51) Internationale Patentklassifikation (IPC):
**E01B 35/00** (2006.01)    **E01B 35/08** (2006.01)
**E01B 27/17** (2006.01)    **B61K 9/08** (2006.01)

(52) Gemeinsame Patentklassifikation (CPC):
**E01B 35/00; B61K 9/08; E01B 35/08;** E01B 27/17

(86) Internationale Anmeldenummer:
**PCT/AT2021/060092**

(87) Internationale Veröffentlichungsnummer:
**WO 2021/203149 (14.10.2021 Gazette 2021/41)**

(54) **VERFAHREN ZUR KALIBRIERUNG EINES MASCHINENEIGENEN MESSSYSTEMS**

METHOD FOR CALIBRATING A MACHINE-INTEGRATED MEASURING SYSTEM

PROCÉDÉ POUR ÉTALONNER UN SYSTÈME DE MESURE INTÉGRÉ DANS UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2020   AT 502962020**

(43) Veröffentlichungstag der Anmeldung:
**15.02.2023   Patentblatt 2023/07**

(73) Patentinhaber: **HP3 Real GmbH**
**1130 Wien (AT)**

(72) Erfinder: **LICHTBERGER, Bernhard**
**1030 Wien (AT)**

(74) Vertreter: **Hübscher & Partner Patentanwälte GmbH**
**Spittelwiese 4**
**4020 Linz (AT)**

(56) Entgegenhaltungen:
**WO-A1-2016/090401**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die Erfindung bezieht sich auf ein Verfahren zur Kalibrierung eines maschineneigenen Messsystems zur Messung der Lage eines Gleises einer mit einem Stopfaggregat und mit einer Gleishebe- Richteinrichtung ausgestatteten Gleisstopfmaschine, wobei das Messsystem zur Bestimmung einer Höhen- und einer Seitenlage des Gleises mit einer eine Sehnenteilung (a, b) aufweisenden Messsehne (I) ausgestattet ist.

Stand der Technik

Ein Verfahren zur Kalibrierung einer Vorrichtung zum Vermessen von Gleisen mit wenigstens einem einer Hebe- Richteinrichtung zugeordneten gleisfahrbaren Gleismesswagen und mit Gleislagemesssensoren zur Messung der Höhenlage, der Richtung und der Überhöhung der Schienen des Gleises mit dem Maschinenrahmen als Referenznulllinie, wobei dem Gleismesswagen eine Messwagenhebe- und Senkvorrichtung zugeordnet ist, ist beispielsweise aus der WO 2016090401 A1 bekannt. Darüber hinaus wird eine Vorrichtung zum Vermessen von Gleisen mit einer Kalibriereinrichtung beschrieben. Um Ungenauigkeiten zu vermeiden und eine einfache und rasche Kalibrierung zu erlauben ist eine dem Maschinenrahmen zugeordnete Kalibriervorrichtung vorgesehen, wobei der Gleismesswagen zum Kalibrieren der Gleislagemesssensoren zunächst aus einer vom Gleis abgehobenen Parkposition ins Gleis oder in eine Zwischenposition abgesenkt wird, wonach Kalibrieranschläge mit einem Stelltrieb aus einer Ruhelage in eine Kalibrierlage verlagert werden, gegen welche Kalibrieranschläge in weiterer Folge der Gleismesswagen angehoben und angestellt wird, wonach die sich ergebenden Werte der Gleislagemesssensoren ausgelesen und als Kalibrierwert in eine Messanlage eingelesen und abgespeichert werden, wonach der Gleismesswagen in das Gleis abgesenkt wird und wonach gegebenenfalls die Kalibrieranschläge mit dem Stelltrieb aus ihrer Kalibrierlage in ihre Ruhelage verlagert werden.

Gleisstopfmaschinen sind Maschinen die die Gleislage berichtigen. Dazu werden Messsysteme benutzt, welche die Gleishöhen-Istlage und die Gleisrichtungs-Istlage sowie die Überhöhungs-Istlage des Gleises während der Arbeit messen können. Mit Hilfe des Gleishebe-/Gleisrichtaggregates wird der Gleisrost angehoben und seitlich ausgerichtet und in korrigierter Lage durch Verdichten des Schotters unter den Schwellen mit Hilfe eines Gleisstopfaggregates fixiert. Die gemessenen Gleislage-Istwerte werden mit den Gleislage-Sollwerten die von einem Gleisgeometrie-Leitcomputer nach den Gleislage-Sollplänen der Bahnverwaltung errechnet werden verglichen und zur Steuerung und Regelung des Gleishebe-/Gleisrichtaggregates benutzt. Das Heben und Richten des Gleisrostes erfolgt dabei über entsprechende hydraulische Hebe- und Richtzylinder mit Proportional- oder Servosteuerung.

Üblich sind Messanlagen die Stahlsehnen benutzen, die zwischen Meßwägen, insbesondere einem vorderen, einem mittleren und einem hinteren Meßwagen, gespannt sind. Bekannt sind aber auch optische Messanlagen mit einer optischen Meßsehne. Beide Systeme können gleichermaßen bei einem erfindungsgemäßen Verfahren zum Einsatz kommen. Der Verständlichkeit halber wird die Wirkungsweise anhand der Stahlsehnenmessanlagen erklärt, sie gilt aber in analoger Weise auch für optische Messeinrichtungen. Diese Stahlsehnen sind zwischen insbesondere drei Messwagen gespannt, wobei der mittlere Wagen einen Richtwertgeber trägt der durch die Sehne ausgelenkt wird. Für die Messung der Höhenlage der Gleise werden über beiden Schienen so genannte Nivellierseile gespannt. Die beiden Messpunkte über den Schienen werden meist über Winkelgeber (Nivellierwertmessgeber) abgetastet. Die Nivelliersehnen müssen oben angeordnet werden, da im unteren Bereich die Stopfaggregate und die Fahrwerke der Stopfmaschine im Weg sind. Auf den Messwagen sind Neigungsmesser aufgebaut, um die Querneigung des Gleises zu erfassen.

Die gemessenen Auslenkungen durch die Nivelliermesswertgeber, Richtwertmessgeber und Überhöhungsmesswertgeber werden in ein elektrisches proportionales Signal umgewandelt. Für die Steuerung der Gleisstopfmaschine sind für jeden der Messwertgeber die Größen Skalenfaktor (z.B. mV/mm oder mA/mm) und die Null-Lage der Messwertgeber für deren Genauigkeit von ausschlaggebender Bedeutung. Um den Offset der Messwertgeber zur Nulllage zu erfassen ist eine Kalibrierung notwendig. Kalibrierung meint hier die Kalibrierung bezüglich einer geraden Referenzlinie zum Bestimmen des Nullwertes der Messgeber. Dies ist deshalb notwendig weil es durch die bauliche Ausführung zu Ungenauigkeiten kommt. Diese Ungenauigkeiten resultieren aus mechanischen Toleranzen, ungenauer Montage, mechanischen Spielen, Fehlern in der Messkette etc. Die Verstärkung (oder der Skalenfaktor in mV/mm oder mA/mm) der einzelnen Messwertgeber kann durch die mechanische Auslenkung um einen bestimmten Verstellwert des Messwertgebers oder der Stahlsehne an einer der Einspannstellen bestimmt werden. Die Neigungsmesser können um einen bestimmten Winkel mechanisch verdreht werden und so bezüglich ihrer Verstärkung kalibriert werden. Derartige Verfahren und Ausführungen sind bekannt.

Das Problem ist vor allem die Nullkalibrierung der Messwertgeber. Nachfolgend soll der Idealfall erläutert werden. Auf einem idealen geraden Gleis werden die Messwagen der Richtanlage an einer Seite angepresst, anschließend wird der Nullpunkt des Messwertgebers bestimmt. Für die Messgeber ganz allgemein muss allerdings auch die gegenüberliegende Seite kalibriert werden. Dazu würde auf einem idealen Gleis (ideales Gleis: beide Schienen bilden ideale Geraden mit gleichem Abstand und liegen genau in einer waagrechten Ebene) an die andere Schiene angepresst und der Nullpunkt für diese Seite bestimmt werden. Der Grund dafür ist darin zu suchen, dass die Richtungsreferenz des Gleises immer an der bogenäußeren Schiene und die Längshöhenreferenz an der bogeninneren Schiene erfolgt. Die Notwendigkeit einer beiderseitigen Nullkalibrierung für die Messwertgeber ergeben sich durch unterschiedliche mechanische Spiele, unterschiedliche Spurmaße der Messwagen und unterschiedliche elektronische Messstrecken etc. Analog würde dies auch für die Längshöhengeber und den Überhöhungsgeber erfolgen.

Es gibt aber kein ideales Gleis. Das Gleis ist mit Längshöhenfehlern, Überhöhungsfehlern, Verwindungen, Richtungsfehlern sowie Spurweitenfehlern behaftet. Dazu kommen unterschiedliche Einsenkungen des Gleises unter Last. Für die Nullkalibrierung eines Gleises wird daher ein so genanntes "Null-Gleis" benötigt. Dazu wird ein Gleisabschnitt von mindestens der Länge der abzugleichenden Messanlage gesucht, welches möglichst geringe Gleislagefehler der oben beschriebenen Art aufweist. Da die geforderten Abgleichsgenauigkeiten unter 1 mm liegen, reichen reale Gleise dafür nicht aus. Vor dem eigentlichen Abgleich muss daher die reale Gleislage mittels geodätischen Messgeräten oder durch andere Methoden (Schnursehne) exakt vermessen werden. Anschließend fährt die Gleisstopfmaschine auf dieses Gleis. Die mittels geodätischen Methoden oder mittels anderer Methoden gemessenen Gleisfehler werden nun mittels Distanzstücken unter den Messrädern für die Höhe bzw. zwischen Spurkranz und Schiene ausgeglichen. Anschließend wird die Nullkalibrierung durchgeführt. Die Vermessung der Gleislage erfolgt in der Regel auf einem realen Gleis ohne Belastung. Durch die Belastung mit der Gleisstopfmaschine kann es zu unbekannten Durchbiegungen der Schiene und des Gleisrostes kommen, was die Genauigkeit der Kalibrierung beeinträchtigt. Zuverlässiger ist ein fest einbetoniertes Gleis - dieses aber ist im Normalfall auf freier Strecke nicht zu finden. Die verwendeten Nullkalibriermethoden sind kostspielig, zeitaufwendig, nur bedingt genau und nur durch qualifiziertes Fachpersonal durchführbar. Eine Überprüfung des Messsystems auf freier Strecke durch den Maschinenführer ist praktisch unmöglich.

Zur Bestimmung der Position eines Messsystems auf dem Gleis werden beispielsweise Odometer verwendet. Es ist auch bekannt für diesen Zweck Satellitensysteme einzusetzen. Trägheitsnavigationssysteme (INS) oder inertiale Navigationssysteme bestehen aus einer zentralen Sensoreinheit mit meist drei Beschleunigungs- und Drehratensensoren. Durch Integration der von der inertialen Messeinheit gemessenen Beschleunigungen und Drehraten werden laufend die räumliche Bewegung des Fahrzeugs und daraus die jeweilige geografische Position bestimmt. Trägheitsnavigationssysteme arbeiten mit Datenraten von etwa 100-1000 Hz und hohen Genauigkeiten und geringer Drift (< 0,01 ° bis 0,05°/ Stunde). Sie kalibrieren sich in Pausen wenn sie nicht bewegt werden automatisch. Der Hauptvorteil dieser Systeme ist, dass diese referenzlos betrieben werden können. Die Beschleunigung kann mittels fahrzeugfester Beschleunigungssensoren gemessen werden. Vorteile dieser Messsysteme sind unabhängig von der Zentrifugalbeschleunigung messbare Rollwinkel, eine in weiten Bereichen geltende Übertragungsfunktion des Systems von =1, d.h. es wird die tatsächliche Spur des Fahrzeuges im Raum gemessen ohne Verzerrungen der Form, der Verstärkung bzw. der Phasenlage der Gleisfehler. Aus dieser dreidimensionalen Spur des Fahrzeuges im Raum und einer Wegmessung über Odometer oder anderen Wegmessmethoden werden 3D-Koordinaten gewonnen. Durch Projektion auf die x-y-Ebene erhält man das Ortsbild des Gleises und die Projektion auf die y-z-Ebene ergibt den Höhenschnitt. Bekannt sind auch so genannte "Nord"-basierte Trägheitsnavigationssysteme die absolute Winkelabweichungen des Roll-, Gier- und Nickwinkels bezogen auf ein nach Nord ausgerichtetes System liefern. Der x-Einheitsvektor zeigt dabei nach Norden, der z-Einheitsvektor in Richtung der Schwerkraft und der y-Einheitsvektor ist dann so ausgerichtet, dass sich ein Orthonormalsystem ausbildet. Die absoluten Winkelabweichungen stellen einen Einheitsvektor dar der die Richtung des Messwagens auf welchem sich das INS-System befindet zeigt.

Der Erfindung liegt somit die Aufgabe zugrunde ein Verfahren zur Kalibrierung eines maschineneigenen Messsystems der eingangs geschilderten Art zu schaffen, welches die Ungenauigkeiten, Nachteile und Aufwendungen der bekannten Kalibriermethoden auf dem "Nullgleis" erübrigt und mit dem eine rasche und einfache, insbesondere automatische, Kalibrierung des maschineneigenen Messsystems möglich ist. Vorzugsweise soll in einer Weiterbildung auch der Skalenfaktor der Messsysteme geprüft und kalibriert werden können.

Darstellung der Erfindung

Die Erfindung löst die gestellte Aufgabe dadurch, dass zunächst über eine gewisse Messstrecke, deren Länge größer ist als die Länge der Messsehne, entlang einer zumindest näherungsweisen Gleisgeraden einerseits eine Ortskurve mit einem Trägheitsnavigationsmesssystem gemessen und abgespeichert wird und andererseits dieselbe Strecke mit dem maschineneigenen Messsystem gemessen und abgespeichert wird. Danach werden die Pfeil- und Längshöhen aus der Ortskurve unter einrechnen der Sehnenteilung der Messsehne in die Ortskurve berechnet. Dies bedeutet im Wesentlichen, dass die Sehne rechnerisch über die Ortskurve geschoben und an Stelle der Teilung der Sehne Pfeil- und Längshöhen aus der Ortskurve abgelesen werden. Zudem werden die aus der Ortskurve berechneten Pfeil- und Längshöhen mit den mit dem maschineneigenen Messsystem gemessen Pfeil- und Längshöhen in Kurvenlängsrichtung gesehen gegebenenfalls in Deckung gebracht, wonach eine Differenzkurve aus den aus der Ortskurve berechneten Pfeil- und Längshöhen und den mit dem mit dem maschineneigenen Messsystem gemessenen Pfeil- und Längshöhen gebildet wird. Von dieser Differenzkurve wird über die Messstrecke ein Mittelwert berechnet der einem Offset entspricht, um den das maschineneigene Messsystem in weiterer Folge kalibriert wird.

Mittels des beispielsweise an einem Messwagen aufgebauten Trägheitsnavigationsmesssystems wird die Ortskurve entlang einer näherungsweisen Geraden einer Gleisstrecke verzerrungsfrei aufgezeichnet. Die Messgrößen wie Pfeilhöhe oder auch Längshöhe werden aus der mit dem Trägheitsnavigationsmesssystem gemessenen Ortskurve errechnet. Dazu können rechnerisch Sehnenmesssysteme mit beliebiger Sehnenlänge und beliebiger Sehnenteilung hineingerechnet und daraus die entsprechenden Pfeilhöhen und Längshöhen bestimmt werden. Es werden insbesondere Sehnenlänge und Sehnenteilung des maschineneigenen Messsystems eingerechnet.

Zudem werden während einer Kalibrierfahrt entlang einer Messstrecke auf einer näherungsweisen Geraden fortwährend die Pfeilhöhen und Längshöhen mittels des aufgebauten maschineneigenen Messsystems bestimmt. Diese Pfeilhöhen und Längshöhen werden gespeichert und entsprechend ortsversetzt mit den Pfeilhöhen und Längshöhen des Trägheitsnavigationsmesssystem verglichen.

Über die Differenzen zwischen den mit dem hochgenauen Trägheitsnavigationsmesssystem gemessenen Pfeilhöhen und Längshöhen mit den Pfeilhöhen und Längshöhen des Maschinenmesssystems wird ein Mittelwert über eine Mindestmesslänge gebildet. Dieser Mittelwert entspricht dem Offset des Maschinenmesssystems.

Die Messung wird einmal mit links angepresstem Messsystem und einmal mit rechts angepresstem Messsystem durchgeführt. Es werden also die Messwägen entweder an die linke oder die rechte Schiene eines Gleises angepresst. Für die Überhöhung wird erfindungsgemäß genauso vorgegangen. Da es sich aber um einen direkt messbaren Wert (Winkel zum Gravitationsvektor) handelt können die Messwerte der Überhöhung unmittelbar verglichen werden. Nach der Bestimmung des Offsets kann mit den nunmehr um den bestimmten Offset ermittelten Messgrößen eine weitere Messfahrt durch einen Vollbogen durchgeführt werden.

Über den Vergleich der gemessenen Pfeilhöhen, Längshöhen und Überhöhungen in einem Vollbogen, mit konstantem Radius, kann der Skalenfaktor des maschineneigenen Messsystems geprüft und kalibriert werden. Dazu wird eine Messfahrt in einem Vollbogen eines Gleises mit einem Radius über eine Länge durchgeführt, wobei für die Pfeil- und Längshöhen des maschineneigenen Messsystems und die Pfeil- und Längshöhen des Trägheitsnavigationssystems über den Meßbereich jeweils die Mittelwerte berechnet werden, wonach aus diesen Mittelwerten ein Quotient errechnet wird, um den ein bisheriger Skalierungsfaktor mit der Formel ( $s'_{f_N} = v \cdot s_{f_N}$ ) zu einem neuen Skalierungsfaktor korrigiert wird. Damit können die Skalierung (Verstärkung) des Maschinenmesssystems überprüft (mA/ mm oder mV/mm) und kalibriert werden.

Vorteilhaft bei dieser erfindungsgemäßen Ausführung ist der Entfall eines "Nullgleises" und die einfach durchzuführende Kalibrierung des maschineneigenen Messsystems mittels einer Messfahrt auf einem realen, näherungsweise geraden Gleis. Vorteilhaft ist auch, dass in einem Arbeitsgang die drei wesentlichen und notwendigen Messgrößen zur Steuerung der Maschine Pfeilhöhe, Längshöhe und Überhöhung kalibriert werden können. Auf diese Weise kann die Funktion des Messsystems und seine Genauigkeit vor Antritt der Baustellenarbeit schnell überprüft werden. Erfindungsgemäß kann das Verfahren auch die Messskala des Maschinenmesssystems durch Fahrt durch einen Vollbogen kalibrieren. Weitere Vorteile sind dadurch gegeben, dass sich für die Kalibrierung kein Personal ins Gleis begeben muss weil dies oft mit Gefährdungen durch den Zugbetrieb am Nachbargleis verbunden ist. Die Erfindung weist überdies enorme Kosteneinsparpotentiale auf und erhöht die Funktionssicherheit der Gleisstopfmaschine.

Kurze Beschreibung der Erfindung

In der Zeichnung ist die Erfindung anhand eines Ausführungsbeispiels schematisch dargestellt. Es zeigen:

Fig. 1 eine auf Schienen 2 über Laufwerke 3 verfahrbare Gleisstopfmaschine 1, mit einem Stopfaggregat 5 und einem Hebe- Richtaggregat 6 zum berichtigen der Gleise 2, mit einem maschineneigenen Messsystem I, 7a, 7b, 4 und einem Navigationsmesssystem INS

Fig. 2 eine mit einem Navigationssystem aufgezeichnete Raumkurve RK und darin eingezeichnet eine Sehne mit der Länge l, der Pfeilhöhe $f_{INS}$ und der Sehnenteilung a, b

Fig. 3 die gemessenen Pfeilhöhen $f_M$ des Stopfmaschinenmesssystems und jene der aus dem Ortsbild errechneten Pfeilhöhen $f_{INS}$,

Fig. 4 die berechneten Differenzen zwischen $f_{INS}$ und $f_M$ sowie der daraus errechnete Mittelwert,

Fig. 5 die gemessenen bzw. aus dem Ortsbild errechneten Pfeilhöhen im Vollbogen R mit der Länge $I_R$.

Weg zur Ausführung der Erfindung

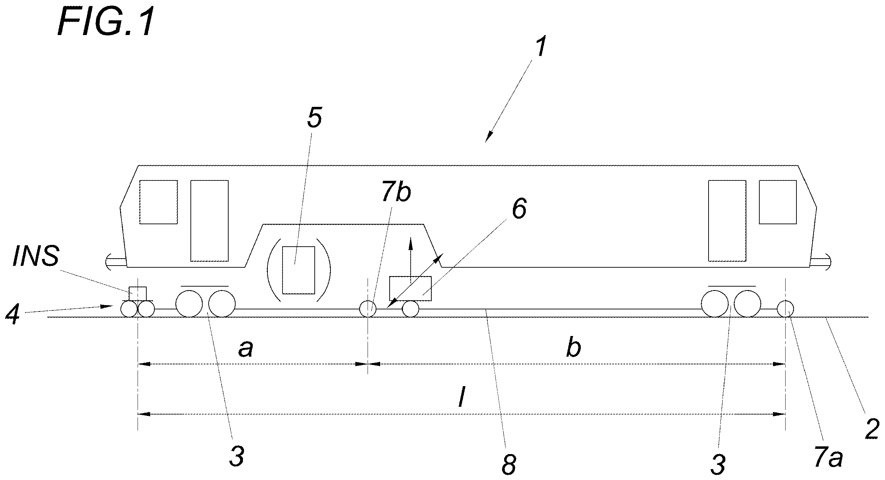

Fig. 1 zeigt eine Stopfmaschine 1 die über Laufwerke 3 auf dem Gleis 2 verfahrbar ist. Über ein Stopfaggregat 5 und eine Vorrichtung zum Heben und Richten 6 kann die Lage eines Gleises 2 im Gleisbett berichtigt werden. Das maschineneigene Messsystem 8 wird von mechanischen Stahlsehnen oder einem optischen System gebildet. Die Stahlsehne 8 oder das optische System wird zwischen dem hinteren Messwagen 4 und dem vorderen Messwagen 7a aufgespannt. Bei einem mittleren Messwagen 7b befinden sich Einrichtungen die die Längshöhe, Pfeilhöhe und Überhöhung messen. Die Sehne hat die Länge I und die Sehnenteilung a, b. Auf dem hinteren zweiachsigen Messwagen 4 ist ein Trägheitsnavigationsmesssystem INS aufgebaut. Das Trägheitsnavigationsmesssystem INS misst den Rollwinkel (entsprechend dem Überhöhungswinkel) den Gierwinkel (entsprechend dem Richtungswinkel) und den Nickwinkel (entsprechend dem Neigungswinkel). Aus diesen Winkeln wird eine Ortskurve RK errechnet und abgespeichert.

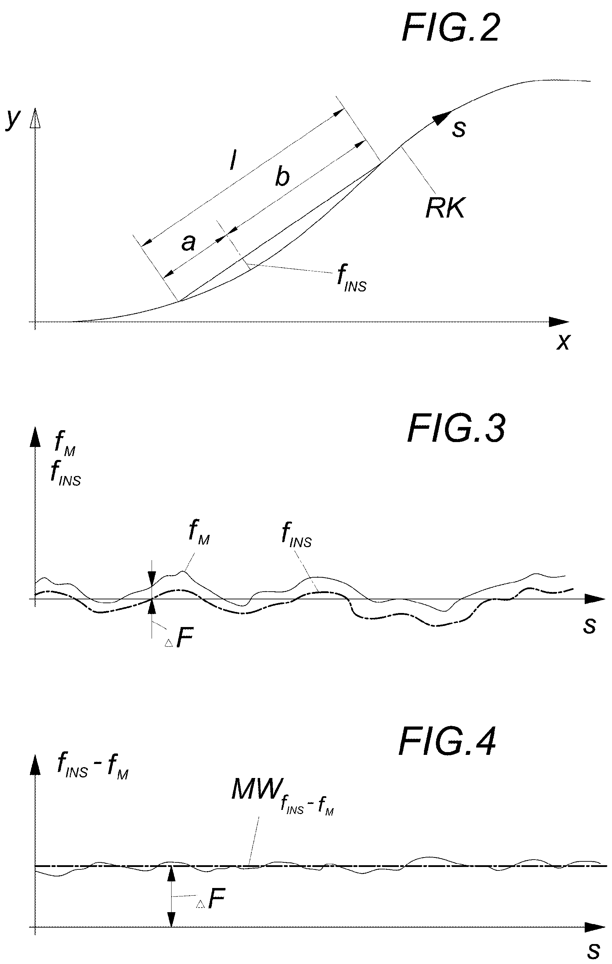

Fig. 2 zeigt eine mittels des Trägheitsnavigationsmesssystems INS gemessene Ortskurve RK im Koordinatensystem x, y. Längs der Ortskurve ist die Bogenlänge s aufgetragen. In die Ortskurve RK wird eine Sehne der Länge I eingerechnet (entsprechend dem auf der Stopfmaschine aufgebauten Sehnenmesssystem) mit der Sehnenteilung a, b. $f_{INS}$ bezeichnet die errechnete Pfeilhöhe. Analog wird mit der Längshöhe verfahren.

Fig. 3. zeigt die mit dem maschineneigenen Messsystem gemessene Pfeilhöhe $f_M$. und die mit dem Trägheitsnavigationsmesssystem INS gemessene Pfeilhöhe $f_{INS}$, die Pfeilhöhe die aus der Ortskurve aus Fig. 2 errechnet wurde über der Bogenlänge s. Die Kurven sind naturgemäß zueinander sehr ähnlich und um den Offset ΔF verschoben.

In Figur 4 ist die Differenz zwischen $f_{ins}$ und $f_M$ aufgetragen. Der Offsetwert ΔF als Korrektur für das maschineneigene Messsystem ergibt sich dann über die Mittelwertbildung $MW_{fINS\text{-}fM}$ über die Differenzen. $MW_{fINS\text{-}fM}$ entspricht dem Offsetwert ΔF der konstant von $f_M$ abgezogen werden muss, um das maschineneigenen Messsystem 8 zu kalibrieren.

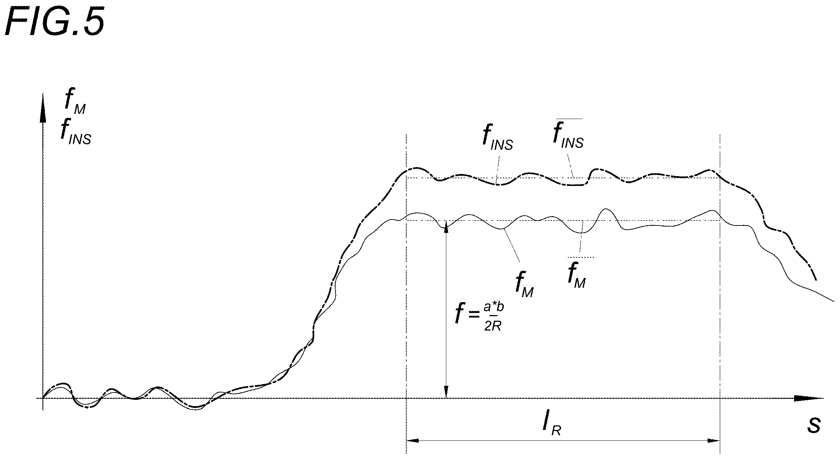

Figur 5 zeigt die mit einem maschineneigenen System gemessene Pfeilhöhe $f_M$ im Vollbogen mit dem Radius R und die entsprechende, aus der Ortskurve RK errechnete Pfeilhöhe $f_{INS}$. Im Bereich des Vollbogens (Länge $I_R$) werden die Mittelwerte $\overline{f_{INS}}$ und $\overline{f_M}$ der beiden Kurven gebildet. Im gezeigten Beispiel ist der Skalierungsfaktor der maschineneigenen Messung zu klein. Um den Korrekturfaktor zu ermitteln wird der Quotient v wie folgt gebildet:

$$v = \frac{\overline{f_{INS}}}{\overline{f_M}}$$

Der neue Skalierungsfaktor $s'_{f_N}$ für die Pfeilhöhe ergibt sich dann mit dem alten nicht exakten Skalierungsfaktor $s_{fN}$ zu:

$$s'_{f_N} = v \cdot s_{f_N}$$

**Patentansprüche**

1. Verfahren zur Kalibrierung eines maschineneigenen Messsystems (8) zur Messung der Lage eines Gleises einer mit einem Stopfaggregat (5) und mit einer Gleishebe- Richteinrichtung (6) ausgestatteten Gleisstopfmaschine (1), wobei das Messsystem (8) zur Bestimmung einer Höhen- und einer Seitenlage des Gleises mit einer eine Sehnenteilung (a, b) aufweisenden Messsehne (I) ausgestattet ist, **dadurch gekennzeichnet, dass** zunächst über eine gewisse Messstrecke (>I) entlang einer zumindest näherungsweisen Gleisgeraden einerseits eine Ortskurve (RK) mit einem Trägheitsnavigationsmesssystem (INS) gemessen und abgespeichert und anderseits dieselbe Strecke mit dem maschineneigenen Messsystem (8) gemessen und abgespeichert wird, wonach die Pfeil- und Längshöhen ($f_{INS}$) aus der Ortskurve (RK) unter einrechnen der Sehnenteilung (a, b) der Messsehne (I) in die Ortskurve (RK) berechnet wird und die berechneten Pfeil- und Längshöhen ($f_{INS}$) mit den mit dem maschineneigenen Messsystems 8 gemessen Pfeil- und Längshöhen ($f_M$) in Gleisrichtung gegebenenfalls in Deckung gebracht werden und wonach eine Differenzkurve ($f_{INS}$-$f_M$) aus den Pfeil- und Längshöhen ($f_{INS}$) und den Pfeil- und Längshöhen ($f_M$) gebildet wird und von dieser Differenzkurve ($f_{INS}$-$f_M$) über die Messstrecke ein Mittelwert ($MW_{fINS\text{-}fM}$) berechnet wird der einem Offset ($\Delta F$) entspricht, um den das maschineneigene Messsystem (8) in weiterer Folge kalibriert wird.

2. Verfahren zur Kalibrierung nach Anspruch 1, **dadurch gekennzeichnet, dass** zur Skalierung des maschineneigenen Messsystems (8) eine Messfahrt in einem Vollbogen eines Gleises mit einem Radius (R) über eine Länge (IR) durchgeführt wird, wobei für die Pfeil- und Längshöhen ($f_M$) des maschineneigenen Messsystems (8) und die Pfeil- und Längshöhen ($f_{INS}$) des Trägheitsnavigationssystems über den Meßbereich (IR) jeweils die Mittelwerte ($\overline{f_{INS}}$, $\overline{f_M}$)

berechnet werden, wonach aus diesen Mittelwerten ($\overline{f_{INS}}$, $\overline{f_M}$) ein Quotient $v = \dfrac{\overline{f_{INS}}}{\overline{f_M}}$ errechnet wird, um den ein bisheriger Skalierungsfaktor ($s_{fN}$) mit der Formel ( $s'_{f_N} = v \cdot s_{f_N}$ ) zu einem neuen Skalierungsfaktor ( $s'_{f_N}$ ) korrigiert wird.

## Claims

1. Method for calibrating a machine-integrated measuring system (8) of a track tamping machine (1), the machine-integrated measuring system (8) used for measuring the position of a track, the track tamping machine (1) equipped with a tamping unit (5) and with a track lifting and positioning device (6), wherein the measuring system (8) for determining a vertical and a lateral position of the track is equipped with a measuring chord (I) having a chord division (a, b), **characterized in that** first of all, over a certain measuring distance (>I) along an at least approximate straight track line, on the one hand a locus (RK) is measured with an inertial navigation measuring system (INS) and stored and, on the other hand, the same distance is measured with the machine-integrated measuring system (8) and stored, after which the longitudinal levels and versines ($f_{INS}$) are calculated from the locus (RK) taking into account the chord division (a, b) of the measuring chord (I) into the locus (RK) and the calculated longitudinal levels and versines ($f_{INS}$) are - if necessary - aligned with the longitudinal levels and versines ($f_M$) measured with the machine-integrated measuring system (8) in the track direction and then a difference curve ($f_{INS}$-$f_M$) is formed from the longitudinal levels and versines ($f_{INS}$) and the longitudinal levels and versines ($f_M$), and from this difference curve ($f_{INS}$-$f_M$) an average value ($MW_{fINS\text{-}fM}$) is calculated over the measuring distance, which average value ($MW_{fINS\text{-}fM}$) corresponds to an offset ($\Delta F$) around which the machine-integrated system (8) is subsequently calibrated.

2. Method for calibrating according to claim 1, **characterized in that** for scaling the machine-integrated measuring system (8) a measuring run is carried out in a full curve of a track with a radius (R) over a length (IR), wherein for the longitudinal levels and versines ($f_M$) of the machine-integrated measuring system (8) and the longitudinal levels and versines ($f_{INS}$) of the inertial navigation system over the measuring range (IR) the average values ($\overline{f_{INS}}$, $\overline{f_M}$) are

calculated, after which a quotient $v = \dfrac{\overline{f_{INS}}}{\overline{f_M}}$ of the average values ($\overline{f_{INS}}$, $\overline{f_M}$) is calculated by which quotient

$v = \dfrac{\overline{f_{INS}}}{\overline{f_M}}$ a previous scaling factor ($s_{fN}$) is corrected to a new scaling factor ( $s'_{f_N}$ ) with the formula (

$s'_{f_N} = v \cdot s_{f_N}$ ).

## Revendications

1. Procédé pour étalonner un système de mesure intégré dans une machine (8) pour mesurer la position d'une voie d'une bourreuse de voie (1), comprenant une unité de bourrage (5) et un dispositif de levage et de redressement de voie (6), dans lequel le système de mesure est équipé d'une corde de mesure (I) qui présente une division de corde (a, b), **caractérisé en ce qu'**en premier lieu un lieu géométrique (RK) est mesuré et enregistré à l'aide d'un système de mesure de navigation inertielle (INS) sur une certaine distance de mesure (> I) le long d'une ligne droite de voie au moins approximative, et **en ce qu'**en second lieu la même distance est mesurée et enregistrée en utilisant le système de mesure intégré dans la machine (8), dans lequel les hauteurs de flèche et les hauteurs longitudinales (f$_{INS}$) sont ensuite calculées à partir du lieu géométrique (RK) en incluant la division de corde (a, b) de la corde de mesure (1) dans le lieu géométrique (RK), et les hauteurs de flèche et les hauteurs longitudinales (f$_{INS}$) calculées sont alors mises en correspondance avec les hauteurs de flèche et les hauteurs longitudinales (f$_{M}$) mesurées en utilisant le système de mesure intégré dans la machine (8) dans le sens de la voie, et dans lequel ensuite une courbe de différence (f$_{INS}$ - f$_{M}$) est établie à partir des hauteurs de flèche et des hauteurs longitudinales (f$_{INS}$) et des hauteurs de flèche et des hauteurs longitudinales (f$_{M}$) et une valeur moyenne (MWf$_{INS}$-f$_{M}$) correspondant à un décalage ($\Delta$F) est calculée à partir de cette courbe de différence (f$_{INS}$-f$_{M}$) sur la distance de mesure, valeur moyenne sur la base de laquelle le système de mesure intégré dans la machine (8) est alors étalonné.

**2.** Procédé d'étalonnage selon la revendication 1, **caractérisé en ce que**, pour la mise à l'échelle du système de mesure intégré dans une machine (8), un parcours de mesure est effectué dans une courbe complète d'une voie présentant un rayon (R) sur une longueur (IR), dans lequel les valeurs moyennes ($\overline{f_{INS}}, \overline{f_{M}}$) pour les hauteurs de flèche et les hauteurs longitudinales (f$_{M}$) du système de mesure intégré dans la machine (8) ainsi que les valeurs moyennes ($\overline{f_{INS}}, \overline{f_{M}}$) pour les hauteurs de flèche et les hauteurs longitudinales (f$_{INS}$) du système de navigation au sol sur le rayon (IR) sont calculées, et ensuite un quotient $v = \dfrac{\overline{f_{INS}}}{\overline{f_M}}$ est calculé à partir de ces valeurs moyennes (f$_{INS}$, f$_{M}$), quotient par lequel un facteur d'échelle précédent $S_{fN}$ est corrigé suivant la formule pour obtenir un nouveau facteur d'échelle $S'_{fN}$ corrigé.

*FIG.1*

EP 4 133 129 B1

## FIG.2

## FIG.3

## FIG.4

## FIG.5

$$f = \frac{a*b}{2R}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016090401 A1